# EUROPEAN PATENT SPECIFICATION

(11) **EP 2 039 532 B1**
(45) Date of publication and mention of the grant of the patent: **21.04.2010**
(21) Application number: 08164598.8
(22) Date of filing: 18.09.2008
(51) Int. Cl.: B60C 1/00, C08K 7/02, C08L 1/00, C08L 9/00

(54) **Tire with component containing cellulose**
Reifen mit einer Komponente, die Cellulose enthält
Pneu avec un composant contenant de la cellulose

(30) Priority: 20.09.2007 US 858335; 20.09.2007 US 858363
(43) Date of publication of application: 25.03.2009
(73) Proprietor: The Goodyear Tire & Rubber Company, Akron, OH 44316-0001 (US)
(72) Inventor: Klinkenberg, Maurice Peter Catharina Jozef, L-9188 Vichten (LU); Thielen, Georges Marcel Victor, L-4995, Schouweiler (LU)
(74) Representative: Kutsch, Bernd

(56) References cited:
- EP-A1- 0 332 459
- EP-A1- 0 905 186
- KR-A- 20020 092 505
- KR-B1- 100 642 055
- US-A- 3 697 364
- US-A- 3 709 845
- US-A- 5 852 079

## Description

### Background of the Invention

In an effort to include renewable resources as components in tires, naturally occurring organic materials have previously been used as fillers in tire rubber compositions. However, compatibility between the organic fillers and rubber is generally poor, leading to low filler loading due to poor filler dispersion and poor adhesion between the rubber and the filler. There is therefore a need for improved rubber compositions containing naturally occurring organic fillers.

### Summary of the Invention

The present invention is directed to a rubber composition according to claim 1 and to a pneumatic tire according to claim 13.

Dependent claims refer to preferred embodiments of the invention.

### Detailed Description of the Invention

In one embodiment, the rubber composition and the pneumatic tire of the present invention contains a rubber composition comprising a substituted polyisoprene comprising units of formula I, wherein -R comprises hydrogen and a substituent group of structure II, wherein the number of substituent groups of structure II occurring per substituted polyisoprene molecule ranges from 1 to 5, and the weight average molecular weight of the substituted polyisoprene ranges from 20000 to 30000.

In another embodiment, the rubber composition and the pneumatic tire of the present invention contains a rubber composition comprising a substituted polyisoprene comprising units of formula I, wherein -R comprises hydrogen and one substituent group of structure III, wherein the number of substituent groups of structures III occurring per substituted polyisoprene molecule ranges from 8 to 12, and the weight average molecular weight of the substituted polyisoprene ranges from 20000 to 30000.

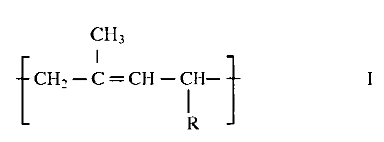

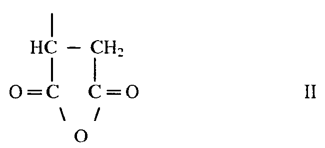

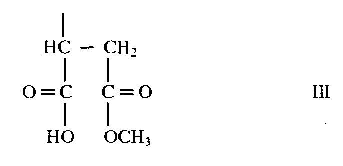

In one embodiment, -R comprises hydrogen and a substituent group of formula II, wherein the number of substituent groups of structure II occurring per substituted polyisoprene molecule ranges from 2 to 4, and the weight average molecular weight of the substituted polyisoprene ranges from 23000 to 27000.

In another embodiment, -R comprises hydrogen and a substituent group of formula III, wherein the number of substituent groups of structures III occurring per substituted polyisoprene molecule ranges from 9 to 11, and the weight average molecular weight of the substituted polyisoprene ranges from 23000 to 27000.

Suitable substituted polyisoprene is available commercially from Kuraray as LIR-403, reportedly having an average of 3 substituent groups of structure II occurring per substituted polyisoprene molecule and an average molecular weight of about 25000.

Another suitable substituted polyisoprene is available commercially from Kuraray as LIR-410, reportedly having an average of 10 substituent groups of structure III occurring per substituted polyisoprene molecule and an average molecular weight of about 25000.

In one embodiment, the substituted polyisoprene is present in the rubber composition in a concentration ranging from 1 to 20 parts by weight per 100 parts by weight of diene based elastomer (phr). In another embodiment, the substituted polyisoprene is present in the rubber composition in a concentration ranging from 5 to 15 parts by weight per 100 parts by weight of diene based elastomer (phr).

The rubber composition also includes a cellulose fiber. By cellulose fiber, it is meant that the cellulose therein is substantially free of lignin. As described herein, the term "cellulose fiber" is intended to exclude those cellulosic materials containing substantial amounts of lignin, such as wood fiber. In one embodiment, the cellulose fiber is from 95 to 99.5 percent cellulose. In one embodiment, the cellulose fiber has an average length of from 15 to 25 microns. In one embodiment, the cellulose fiber has an average length of from 15 to 20 microns. In one embodiment, the cellulose fiber has an average thickness of from 10 to 20 microns. In one embodiment, the cellulose fiber has an average thickness of from 12 to 18 microns. Suitable cellulose fiber is available commercially from J. Rettenmaier & Söhne GmbH as Arbocel® BE 600-10 TG.

In one embodiment, the cellulose fiber is present in the rubber composition in a concentration ranging from 1 to 30 parts by weight per 100 parts by weight of diene based elastomer (phr). In another embodiment, the cellulose fiber is present in the rubber composition in a concentration ranging from 5 to 25 parts by weight per 100 parts by weight of diene based elastomer (phr). In another embodiment, the cellulose fiber is present in the rubber composition in a concentration ranging from 10 to 20 parts by weight per 100 parts by weight of diene based elastomer (phr).

In a further aspect of the invention, -R in formula I may also be a moiety different from a substituent group of structure II or structure III such a hydrolyzed substituent group of structure II comprising two -OH groups linked to the respective carbon atom instead of the oxygen atom bridging the two carbon atoms in structure II. Alternatively, the moiety may be an epoxy substituent group. Furthermore, as -R may be different in the various units of formula I of the substituted polyisoprene, the substituted polyisoprene may comprise units wherein -R is a substituent group of structure II and other units wherein -R is a substituent group of structure III as well as units wherein -R is hydrogen or another moiety as explained above. Preferably, the rubber composition is in accordance with claim 2 or 3.

The rubber composition may be used with rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 80 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as silicas commercially available from PPG Industries under the Hi-Sil trademark with designations 210, 243, etc; silicas available from Rhodia, with, for example, designations of Z1165MP and Z165GR and silicas available from Degussa AG with, for example, designations VN2 and VN3, etc.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including particulate fillers including ultra high molecular weight polyethylene (UHMWPE), crosslinked particulate polymer gels like those disclosed in US-B- 6,242,534; US-B-6,207,757; US-B-6,133,364; US-B- 6,372,857; US-B- 5,395,891; or US-B-6,127,488, and plasticized starch composite filler including but not limited to that disclosed in US-B- 5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Z-Alk-Sₙ-Alk-Z IV

in which Z is selected from the group consisting of 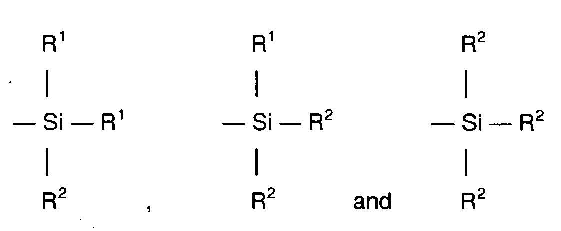 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula IV, Z may be 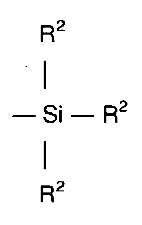 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O)
-S-CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr. Typical amounts of processing aids comprise 1 to 50 phr. Typical amounts of antioxidants comprise 1 to 5 phr. A representative antioxidant is diphenyl-p-phenylenediamine. Typical amounts of antiozonants comprise 1 to 5 phr. Typical amounts of fatty acids, if used, which can include stearic acid comprise 0.5 to 3 phr. Typical amounts of zinc oxide comprise 1 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road, truck tire, and the like. In one embodiment, the tire is a passenger or truck tire. The tire may be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air.

The invention is further illustrated by the following examples.

### EXAMPLE 1

In this example, the effect of adding a substituted polyisoprene to a rubber composition containing cellulose according to the present invention is illustrated. Rubber compositions containing diene based elastomer, fillers, process aids, antidegradants, and curatives were prepared following recipes as shown in Table 1, with all amounts given in parts by weight per 100 parts by weight of base elastomer (phr). Samples 1 through 4 contained carbon black but no cellulose and served as controls. Samples 5 through 7 included carbon black and cellulose and are representative of the present invention. The amount of substituted polyisoprene was varied from 0 to 15 phr; a polyisoprene homopolymer of a molecular weight similar to the substituted polyisoprene was used to maintain the total concentration of (substituted polyisoprene + polyisoprene homopolymer) constant at 15 phr.

The samples were tested for viscoelastic properties using RPA. "RPA" refers to a Rubber Process Analyzer as RPA 2000™ instrument by Alpha Technologies, formerly the Flexsys Company and formerly the Monsanto Company. References to an RPA 2000 instrument may be found in the following publications: H. A. Palowski, et al, Rubber World, June 1992 and January 1997, as well as Rubber & Plastics News, April 26 and May 10, 1993.

The "RPA" test results in Table 2 are reported as being from data obtained at 100°C in a dynamic shear mode at a frequency of 1 Hertz and at the reported dynamic strain values. Tensile and hardness properties were also measured and reported in Table 3.

**TABLE 1**

| | |
|---|---|
| Natural Rubber | 100 |
| Carbon Black | variable as per Table 2 |
| Cellulose¹ | variable as per Table 2 |
| Antidegradant | 1 |
| Zinc Oxide | 2.5 |
| Stearic Acid | 2 |
| Sulfur | 1.6 |
| Accelerator | 1.2 |
| Liquid polyisoprene² | variable as per Table 2 |
| Substituted polyisoprene³ | variable as per Table 2 |

| | |
|---|---|
| ¹ Arbocel BE 600-10 TG, from J. Rettenmaier & Söhne GmbH + Co. ² LIR-30, polyisoprene homopolymer with molecular weight of 29000; from Kuraray. ³ LIR-403, substituted polyisoprene with 3 groups of structure II per molecule and molecular weight of 25000; from Kuraray. | |

**TABLE 2**

| Type | Control samples | | | | Inventive samples | | | |
|---|---|---|---|---|---|---|---|---|
| Sample No. | 1 | 2 | 3 | 4 | 5* | 6 | 7 | 8 |
| Carbon Black | 30 | 30 | 30 | 30 | 30 | 30 | 30 | 30 |
| Cellulose | 0 | 0 | 0 | 0 | 20 | 20 | 20 | 20 |
| Liquid polyisoprene¹ | 15 | 10 | 5 | 0 | 0 | 5 | 10 | 15 |
| Substituted polyisoprene² | 0 | 5 | 10 | 15 | 0 | 5 | 10 | 15 |

| | | | | | | | | |
|---|---|---|---|---|---|---|---|---|
| ¹ LIR-30, polyisoprene homopolymer with molecular weight of 29,000; from Kuraray. ² LIR-403, substituted polyisoprene with 3 groups of structure II per molecule and molecular weight of 25000; from Kuraray. | | | | | | | | |
| * Comparative Example | | | | | | | | |

**TABLE 3**

| Sample No. | 1 | 2 | 3 | 4 | 5 | 6 | 7 | 8 |
|---|---|---|---|---|---|---|---|---|
| *RPA, 100°C, 1 Hz* | | | | | | | | |
| G', 1 % strain (M Pa) | 0.61 | 0.66 | 0.67 | 0.67 | 0.72 | 0.81 | 0.82 | 0.79 |
| G', 10% strain (MPa) | 0.56 | 0.6 | 0.62 | 0.62 | 0.66 | 0.72 | 0.73 | 0.73 |
| G', 50% strain (MPa) | 0.50 | 0.52 | 0.54 | 0.55 | 0.57 | 0.61 | 0.63 | 0.65 |
| tan delta, 10% strain | 0.037 | 0.046 | 0.045 | 0.044 | 0.036 | 0.049 | 0.05 | 0.047 |
| | | | | | | | | |
| Shore A Hardness 23ºC | 43 | 44 | 45 | 48 | 49 | 51 | 52 | 53 |
| *Ring Modulus, 23ºC* | | | | | | | | |
| Elongation at break, % | 715 | 714 | 686 | 687 | 628 | 599 | 585 | 558 |
| Modulus 100%, MPa | 0.9 | 1 | 1.1 | 1.2 | 1.3 | 1.6 | 1.7 | 2 |
| Modulus 300%, MPa | 3.6 | 3.8 | 4.2 | 4.7 | 4.2 | 5 | 5.4 | 6.5 |
| Tensile Strength, MPa | 19.6 | 20.3 | 20.2 | 21.2 | 15.4 | 15.4 | 15.6 | 15.9 |

### EXAMPLE 2

In this example, the effect of adding a substituted polybutadiene having a molecular weight of 5600 and 11 substituent groups per molecule to a rubber composition containing cellulose in comparison to the present invention is illustrated. Rubber compositions containing diene based elastomer, fillers, process aids, antidegradants, and curatives were prepared following recipes as shown in Table 4, with all amounts given in parts by weight per 100 parts by weight of base elastomer (phr). Samples 9 through 16 served as comparative samples; Samples 9 through 12 contained carbon black but no cellulose, and Samples 13 through 16 included carbon black and cellulose. The amount of substituted polybutadiene was varied from 0 to 15 phr; a polybutadiene homopolymer of a molecular weight similar to the substituted polyisoprene was used to maintain the total concentration of (substituted polybutadiene + polybutadiene homopolymer) constant at 15 phr. Samples were tested for viscoelastic and physical properties as described in Example 1, with results given in Tables 5 and 6.

**TABLE 4**

| | |
|---|---|
| Natural Rubber | 100 |
| Carbon Black | variable as per Table 2 |
| Cellulose¹ | variable as per Table 2 |
| Antidegradant | 1 |
| Zinc Oxide | 2.5 |
| Stearic Acid | 2 |
| Sulfur | 1.6 |
| Accelerator | 1.2 |
| Liquid polyisoprene² | variable as per Table 2 |
| Substituted polyisoprene³ | variable as per Table 2 |

| | |
|---|---|
| ¹ Arbocel BE 600-10 TG, from J. Rettenmaier & Söhne GmbH + Co. ² R131, polybutadiene homopolymer with molecular weight of 4500, from Sartomer. ³ R131 MA20, substituted polybutadiene with molecular weight of 5600 and 11 substituent groups according to structure II per molecule, from Sartomer. | |

**TABLE 5**

| Type | Comparative samples | | | | | | | |
|---|---|---|---|---|---|---|---|---|
| Sample No. | 9 | 10 | 11 | 12 | 13 | 14 | 15 | 16 |
| Carbon Black | 30 | 30 | 30 | 30 | 30 | 30 | 30 | 30 |
| Cellulose | 0 | 0 | 0 | 0 | 20 | 20 | 20 | 20 |
| Liquid polybutadiene¹ | 15 | 10 | 5 | 0 | 15 | 10 | 5 | 0 |
| Substituted polybutadiene² | 0 | 5 | 10 | 15 | 0 | 5 | 10 | 15 |

| | | | | | | | | |
|---|---|---|---|---|---|---|---|---|
| ¹ R131, polybutadiene homopolymer with molecular weight of 4500, from Sartomer. ² R131 MA20, substituted polybutadiene with molecular weight of 7500 and 11 substituent groups according to structure II per molecule, from Sartomer. | | | | | | | | |

**TABLE 6**

| Sample No. | 9 | 10 | 11 | 12 | 13 | 14 | 15 | 16 |
|---|---|---|---|---|---|---|---|---|
| *RPA, 100°C, 1 Hz* | | | | | | | | |
| G', 1 % strain (M Pa) | 0.56 | 0.52 | 0.38 | 0.37 | 0.66 | 0.52 | 0.45 | 0.45 |
| G', 10% strain (MPa) | 0.52 | 0.5 | 0.35 | 0.34 | 0.6 | 0.47 | 0.39 | 0.39 |
| G', 50% strain (MPa) | 0.46 | 0.44 | 0.27 | 0.27 | 0.51 | 0.37 | 0.27 | 0.28 |
| tan delta, 10% strain | 0.033 | 0.053 | 0.22 | 0.242 | 0.047 | 0.13 | 0.259 | 0.28 |
| | | | | | | | | |
| Shore A Hardness 23ºC | 41 | 39 | 31 | 34 | 45 | 40 | 38 | 42 |
| *Ring Modulus, 23ºC* | | | | | | | | |
| Elongation at break, % | 694 | 646 | 424 | 452 | 634 | 532 | 514 | 462 |
| Modulus 100%, MPa | 0.8 | 0.8 | 0.5 | 0.6 | 1.2 | 0.8 | 0.7 | 0.8 |
| Modulus 300%, MPa | 3.4 | .34 | 1.5 | 1.6 | 4.3 | 3.1 | 2.4 | 2.7 |
| Tensile Strength, MPa | 17.8 | 13.9 | 2.4 | 2.9 | 15.5 | 7.2 | 4.7 | 4.3 |

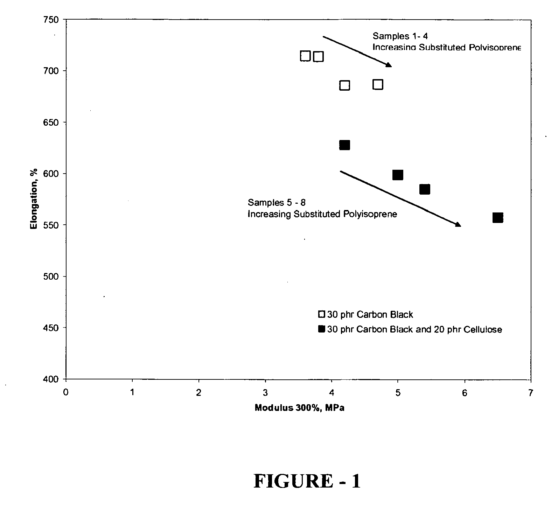

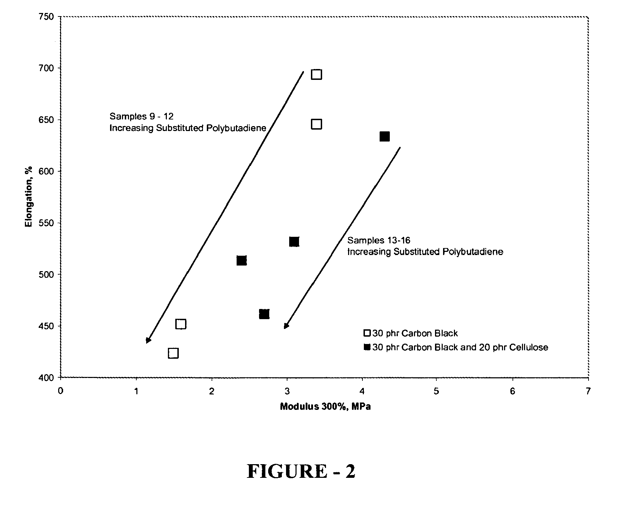

With reference now to Figures 1 and 2, the elongation at break is plotted versus the modulus at 300 percent elongation for each of Samples 1 through 8 (Figure 1) and Samples 9 through 16 (Figure 2).

As seen in Figure 1, Samples 5 through 8 containing cellulose showed a significant increase in modulus with increasing concentration of substituted polyisoprene, as compared with Samples 1 through 4 containing no cellulose. While not wishing to be bound by any theory, it is believed that the increase in modulus indicates a significant interaction between the cellulose, substituted polyisoprene, and base elastomer. Samples 1 through 4 showed some increase in modulus, indicating some interaction between the carbon black and substituted polyisoprene, but considerably less so than for the cellulose-containing Samples 5 through 8. Surprisingly and unexpectedly, the modulus increases by more than 53 percent with increasing substituted polyisoprene for samples with cellulose (Sample 8 vs Sample 5), compared to an increase of only 33 percent for samples with carbon black (Sample 4 vs Sample 1).

By contrast and as seen in Figure 2, comparative Samples 9 through 12 containing carbon black, and comparative Samples 13 through 16 containing carbon black and cellulose surprisingly and unexpectedly showed an actual decrease in modulus with increasing substituted polybutadiene. While not wishing to be bound by any theory, it is believed that the higher number of substituted groups per molecule in the substituted polybutadiene additive interfered with the interaction of the additive with the remainder of the rubber composition as shown in Figure 2, in contrast to the behavior shown in Figure 1.

### EXAMPLE 3

In this example, the effect of adding a substituted polyisoprene to a rubber composition containing cellulose according to another embodiment of the present invention is illustrated. Rubber compositions containing diene based elastomer, fillers, process aids, antidegradants, and curatives were prepared following recipes as shown in Table 7, with all amounts given in parts by weight per 100 parts by weight of base elastomer (phr). Samples 17 through 20 contained carbon black but no cellulose and served as controls. Sample 21 through 23 included carbon black and cellulose and are representative of the present invention. The amount of substituted polyisoprene was varied from 0 to 15 phr; a polyisoprene homopolymer of a molecular weight similar to the substituted polyisoprene was used to maintain the total concentration of (substituted polyisoprene + polyisoprene homopolymer) constant at 15 phr.

The samples were tested for viscoelastic properties using RPA. "RPA" refers to a Rubber Process Analyzer as RPA 2000™ instrument by Alpha Technologies, formerly the Flexsys Company and formerly the Monsanto Company. References to an RPA 2000 instrument may be found in the following publications: H. A. Palowski, et al, Rubber World, June 1992 and January 1997, as well as Rubber & Plastics News, April 26 and May 10, 1993.

The "RPA" test results in Table 8 are reported as being from data obtained at 100°C in a dynamic shear mode at a frequency of 1 Hertz and at the reported dynamic strain values. Tensile and hardness properties were also measured and reported in Table 8.

**TABLE 7**

| | |
|---|---|
| Natural Rubber | 100 |
| Carbon Black | variable as per Table 8 |
| Cellulose¹ | variable as per Table 8 |
| Antidegradant | 1 |
| Zinc Oxide | 2.5 |
| Stearic Acid | 2 |
| Sulfur | 1.6 |
| Accelerator | 1.2 |
| Liquid polyisoprene² | variable as per Table 8 |
| Substituted polyisoprene³ | variable as per Table 8 |

| | |
|---|---|
| ¹ Arbocel BE 600-10 TG, from J. Rettenmaier & Söhne GmbH + Co. ² LIR-30, polyisoprene homopolymer with a molecular weight of 29,000. ³ LIR-410, substituted polyisoprene as per formula I with 10 units of formula III structure per molecule and a molecular weight of 25000. | |

**TABLE 8**

| Type | Control samples | | | | Inventive samples | | |
|---|---|---|---|---|---|---|---|
| Sample No. | 17 | 18 | 19 | 20 | 21* | 22 | 23 |
| Carbon Black | 30 | 30 | 30 | 30 | 30 | 30 | 30 |
| Cellulose | 0 | 0 | 0 | 0 | 20 | 20 | 20 |
| Liquid polyisoprene¹ | 15 | 10 | 5 | 0 | 15 | 10 | 0 |
| Substituted polyisoprene² | 0 | 5 | 10 | 15 | 0 | 5 | 15 |

| | | | | | | | |
|---|---|---|---|---|---|---|---|
| ¹ LIR-30, LIR-30, polyisoprene homopolymer with a molecular weight of 29,000. ² LIR-410, substituted polyisoprene as per formula I with 10 units of formula III structure per molecule and a molecular weight of 25000. | | | | | | | |
| * Comparative Example | | | | | | | |

**TABLE 9**

| Sample No. | 17 | 18 | 19 | 20 | 21 | 22 | 23 |
|---|---|---|---|---|---|---|---|
| *RPA, 100°C, 1 Hz* | | | | | | | |
| G', 1 % strain (M Pa) | 0.61 | 0.66 | 0.66 | 0.66 | 0.72 | 0.78 | 0.8 |
| G', 10% strain (MPa) | 0.56 | 0.59 | 0.6 | 0.61 | 0.66 | 0.7 | 0.73 |
| G', 50% strain (MPa) | 0.50 | 0.52 | 0.53 | 0.54 | 0.57 | 0.6 | 0.62 |
| tan delta, 10% strain | 0.037 | 0.047 | 0.055 | 0.063 | 0.036 | 0.05 | 0.071 |
| | | | | | | | |
| Shore A Hardness 23ºC | 43 | 45 | 48 | 50 | 49 | 52 | 56 |
| *Ring Modulus, 23ºC* | | | | | | | |
| Elongation at break, % | 715 | 707 | 675 | 666 | 628 | 565 | 525 |
| Modulus 100%, MPa | 0.9 | 1.1 | 1.2 | 1.3 | 1.3 | 1.8 | 2.2 |
| Modulus 300%, MPa | 3.6 | 4.2 | 4.6 | 5.1 | 4.2 | 6.3 | 7.7 |
| Tensile Strength, MPa | 19.6 | 21 | 20 | 20.5 | 15.4 | 15.7 | 15.3 |

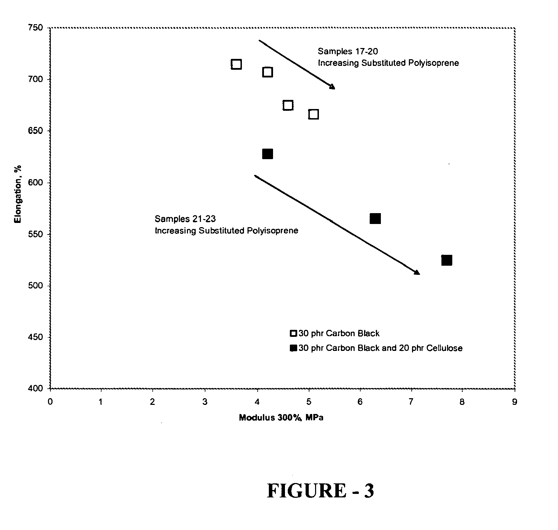

With reference now to Figures 3 and 2, the elongation at break is plotted versus the modulus at 300 percent elongation for each of Samples 17 through 23 (Figure 3) and Samples 9 through 16 (Figure 2).

As seen in Figure 3, Samples 21 through 23 containing cellulose showed a significant increase in modulus with increasing concentration of substituted polyisoprene, as compared with Samples 17 through 20 containing no cellulose. While not wishing to be bound by any theory, it is believed that the increase in modulus indicates a significant interaction between the cellulose, substituted polyisoprene, and base elastomer. Samples 17 through 20 showed some increase in modulus, indicating some interaction between the carbon black and substituted polyisoprene, but considerably less so than for the cellulose-containing Samples 21 through 23. Surprisingly and unexpectedly, the modulus increases by more than 83 percent with increasing substituted polyisoprene for samples with cellulose (Sample 23 vs Sample 21), compared to an increase of only 42 percent for samples with carbon black (Sample 20 vs Sample 17).

By contrast and as seen in Figure 2, comparative Samples 9 through 12 containing carbon black, and comparative Samples 13 through 16 containing carbon black and cellulose surprisingly and unexpectedly showed an actual decrease in modulus with increasing substituted polybutadiene. While not wishing to be bound by any theory, it is believed that the higher number of substituted groups per molecule in the substituted polybutadiene additive interfered with the interaction of the additive with the remainder of the rubber composition as shown in Figure 2, in contrast to the behavior shown in Figure 3.

## Claims

1. A rubber composition comprising a diene based elastomer, from 1 to 30 parts by weight per 100 parts by weight of the diene based elastomer (phr) of cellulose fiber, and from 1 to 20 phr of a substituted polyisoprene comprising units of the formula I, wherein
(i) -R is selected in a respective unit from the group consisting of hydrogen, a substituent group of structure II, a substituent group of structure III or an other moiety; wherein 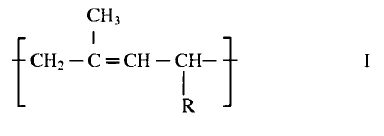 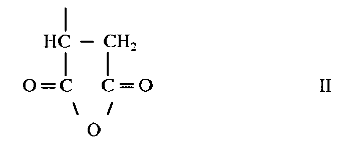 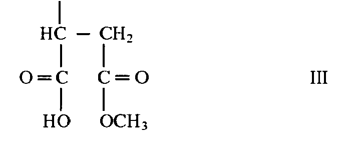
(ii) the number of substituent groups of structure II occurring per substituted polyisoprene molecule ranges from 1 to 6 and/or wherein the number of substituent groups of structure III occurring per substituted polyisoprene molecule ranges from 7 to 13; and wherein
(iii) the weight average molecular weight of the substituted polyisoprene ranges from 20000 to 30000.

2. The rubber composition of claim 1 wherein -R is selected in a respective unit from the group consisting of hydrogen and a substituent group of structure II and wherein the number of substituent groups of structure II occurring per substituted polyisoprene molecule ranges from 1 to 5.

3. The rubber composition of claim 1 wherein -R is selected in a respective unit from the group consisting of hydrogen and a substituent group of structure III and wherein the number of substituent groups of structure III occurring per substituted polyisoprene molecule ranges from 8 to 12.

4. The rubber composition of at least one of the previous claims wherein the number of substituent groups of structure II occurring per substituted polyisoprene molecule ranges from 2 to 4 and wherein the weight average molecular weight of the substituted polyisoprene ranges from 23000 to 27000.

5. The rubber composition of at least one of the previous claims wherein the number of substituent groups of structure III occurring per substituted polyisoprene molecule ranges from 9 to 11 and wherein the weight average molecular weight of the substituted polyisoprene ranges from 23000 to 27000.

6. The rubber composition of at least one of the previous claims wherein the substituted polyisoprene is present in a concentration ranging from 5 to 15 phr.

7. The rubber composition of at least one of the previous claims wherein the cellulose fiber is present in a concentration ranging from 5 to 25 parts by weight per 100 parts by weight of diene based elastomer (phr).

8. The rubber composition of at least one of the previous claims wherein the cellulose fiber has an average length of from 15 to 25 microns.

9. The rubber composition of at least one of the previous claims wherein the cellulose fiber is from 95 to 99.5 percent by weight cellulose.

10. The rubber composition of at least one of the previous claims wherein the diene based elastomer is selected from the group consisting of natural rubber, synthetic polyisoprene rubber, polybutadiene rubber, and styrene-butadiene rubber.

11. The rubber composition of at least one of the previous claims further comprising from 20 to 80 phr of carbon black.

12. The rubber composition of at least one of the previous claims further comprising from 20 to 80 phr of silica.

13. A pneumatic tire having at least one component comprising the rubber composition according to one of the previous claims.

14. The pneumatic tire of claim 13 wherein the tire comprises the rubber composition according to one of the claims 1 to 12 in its tread.

## Patentansprüche

1. Kautschukzusammensetzung, umfassend ein dienbasiertes Elastomer, 1 bis 30 Gewichtsteile pro 100 Gewichtsteile des dienbasierten Elastomers (ThK) an Cellulosefaser, und 1 bis 20 ThK eines substituierten Polyisoprens, das Einheiten der Formel I umfasst, wobei
(i) -R in einer jeweiligen Einheit aus der Gruppe ausgewählt ist, bestehend aus Wasserstoff, einer Substituentengruppe der Struktur II, einer Substituentengruppe der Struktur III oder einem anderen Anteil; wobei 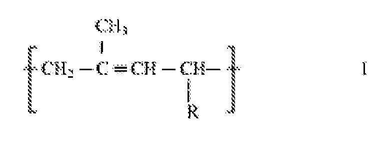 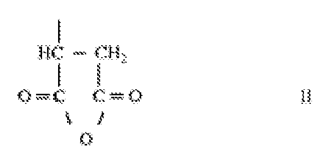 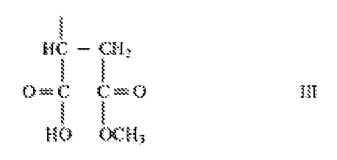
(ii) die Anzahl der pro substituiertes Polyisoprenmolekül auftretenden Substituentengruppen der Struktur II sich auf 1 bis 6 beläuft, und/oder wobei die Anzahl der pro substituiertes Polyisoprenmolekül auftretenden Substituentengruppen der Struktur III sich auf 7 bis 13 beläuft; und wobei
(iii) die gewichtsmittlere Molmasse des substituierten Polyisoprens sich auf 20.000 bis 30.000 beläuft.

2. Kautschukzusammensetzung nach Anspruch 1, wobei -R in einer jeweiligen Einheit aus der Gruppe ausgewählt ist, bestehend aus Wasserstoff und einer Substituentengruppe der Struktur II, und wobei die Anzahl der pro substituiertes Polyisoprenmolekül auftretenden Substituentengruppen der Struktur II sich auf 1 bis 5 beläuft.

3. Kautschukzusammensetzung nach Anspruch 1, wobei -R in einer jeweiligen Einheit aus der Gruppe ausgewählt ist, bestehend aus Wasserstoff und einer Substituentengruppe der Struktur III, und wobei die Anzahl der pro substituiertes Polyisoprenmolekül auftretenden Substituentengruppen der Struktur III sich auf 8 bis 12 beläuft.

4. Kautschukzusammensetzung nach mindestens einem der vorgenannten Ansprüche, wobei die die Anzahl der pro substituiertes Polyisoprenmolekül auftretenden Substituentengruppen der Struktur II sich auf 2 bis 4 beläuft und wobei die gewichtsmittlere Molmasse des substituierten Polyisoprens sich auf 23.000 bis 27.000 beläuft.

5. Kautschukzusammensetzung nach mindestens einem der vorgenannten Ansprüche, wobei die die Anzahl der pro substituiertes Polyisoprenmolekül auftretenden Substituentengruppen der Struktur III sich auf 9 bis 11 beläuft und wobei die gewichtsmittlere Molmasse des substituierten Polyisoprens sich auf 23.000 bis 27.000 beläuft.

6. Kautschukzusammensetzung nach mindestens einem der vorgenannten Ansprüche, wobei das substituierte Polyisopren in einer sich auf 5 bis 15 ThK belaufenden Konzentration vorhanden ist.

7. Kautschukzusammensetzung nach mindestens einem der vorgenannten Ansprüche, wobei die Cellulosefaser in einer sich auf 5 bis 25 Gewichtsteile pro 100 Gewichtsteile dienbasierten Elastomers (ThK) belaufenden Konzentration vorhanden ist.

8. Kautschukzusammensetzung nach mindestens einem der vorgenannten Ansprüche, wobei die Cellulosefaser eine durchschnittliche Länge von 15 bis 25 Mikron aufweist.

9. Kautschukzusammensetzung nach mindestens einem der vorgenannten Ansprüche, wobei die Cellulosefaser zu 95 bis 99,5 Gewichtsprozent aus Cellulose besteht.

10. Kautschukzusammensetzung nach mindestens einem der vorgenannten Ansprüche, wobei das dienbasierte Elastomer aus der Gruppe ausgewählt ist, bestehend aus Naturkautschuk, synthetischem Polyisoprenkautschuk, Polybutadienkautschuk und Styrol-Butadien-Kautschuk.

11. Kautschukzusammensetzung nach mindestens einem der vorgenannten Ansprüche, welche weiter 20 bis 80 ThK Carbon Black enthält.

12. Kautschukzusammensetzung nach mindestens einem der vorgenannten Ansprüche, welche weiter 20 bis 80 ThK Silika enthält.

13. Luftreifen, der mindestens eine Komponente aufweist, welche die Kautschukzusammensetzung nach einem der vorgenannten Ansprüche umfasst.

14. Luftreifen nach Anspruch 13, wobei der Reifen die Kautschukzusammensetzung nach einem der Ansprüche 1 bis 12 in seiner Lauffläche umfasst.

## Revendications

1. Composition de caoutchouc comprenant un élastomère à base diénique, un élastomère à base diénique contenant des fibres de cellulose à concurrence de 1 à 30 parties en poids par 100 parties en poids (phr) et, à concurrence de 1 à 20 phr, un polyisoprène substitué comprenant des unités répondant à la formule I dans laquelle
(i) -R représente une unité respective choisie parmi le groupe constitué par un atome d'hydrogène, un groupe substituant possédant la structure II, un groupe substituant possédant la structure III, ou une autre fraction : 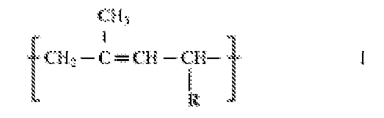 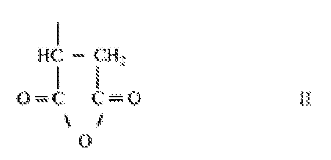 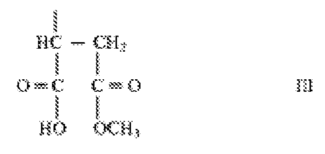
(ii) le nombre des groupes substituants de structure II se situant, par molécule de polyisoprène substitué, dans la plage de 1 à 6 et/ou le nombre des groupes substituants de structure III se situant, par molécule de polyisoprène substitué, dans la plage de 7 à 13 ; et
(iii) le poids moléculaire moyen en poids du polyisoprène substitué se situant dans la plage de 20.000 à 30.000.

2. Composition de caoutchouc selon la revendication 1, dans laquelle -R représente une unité respective choisie parmi le groupe constitué par un atome d'hydrogène et un groupe substituant possédant la structure II, le nombre des groupes substituants de structure II se situant, par molécule de polyisoprène substitué, dans la plage de 1 à 5.

3. Composition de caoutchouc selon la revendication 1, dans laquelle -R représente une unité respective choisie parmi le groupe constitué par un atome d'hydrogène et un groupe substituant possédant la structure III, le nombre des groupes substituants de structure III se situant, par molécule de polyisoprène substitué, dans la plage de 8 à 12.

4. Composition de caoutchouc selon au moins une des revendications précédentes, dans laquelle le nombre des groupes substituants de structure II se situe, par molécule de polyisoprène substitué, dans la plage de 2 à 4 et le poids moléculaire moyen en poids du polyisoprène substitué se situe dans la plage de 23.000 à 27.000.

5. Composition de caoutchouc selon au moins une des revendications précédentes, dans laquelle le nombre des groupes substituants de structure III se situe, par molécule de polyisoprène substitué, dans la plage de 9 à 11 et le poids moléculaire moyen en poids du polyisoprène substitué se situe dans la plage de 23.000 à 27.000.

6. Composition de caoutchouc selon au moins une des revendications précédentes, dans laquelle le polyisoprène substitué est présent en une concentration qui se situe dans la plage de 5 à 15 phr.

7. Composition de caoutchouc selon au moins une des revendications précédentes, dans laquelle les fibres cellulosiques sont présentes en une concentration de 5 à 25 parties en poids par 100 parties en poids (phr) de l'élastomère à base diénique.

8. Composition de caoutchouc selon au moins une des revendications précédentes, dans laquelle les fibres cellulosiques possèdent une longueur moyenne de 15 à 25 microns.

9. Composition de caoutchouc selon au moins une des revendications précédentes, dans laquelle les fibres cellulosiques contiennent de la cellulose à concurrence de 95 à 99,5 % en poids.

10. Composition de caoutchouc selon au moins une des revendications précédentes, dans laquelle l'élastomère à base diénique est choisi parmi le groupe constitué par le caoutchouc naturel, du caoutchouc de polyisoprène synthétique, du caoutchouc de polybutadiène et du caoutchouc de styrène-butadiène.

11. Composition de caoutchouc selon au moins une des revendications précédentes, comprenant en outre du noir de carbone à concurrence de 20 à 80 phr.

12. Composition de caoutchouc selon au moins une des revendications précédentes, comprenant en outre de la silice à concurrence de 20 à 80 phr.

13. Bandage pneumatique possédant au moins un composant comprenant la composition de caoutchouc selon au moins une des revendications précédentes.

14. Bandage pneumatique selon la revendication 13, dans lequel le bandage pneumatique comprend la composition de caoutchouc selon au moins une des revendications 1 à 12 dans sa bande de roulement.
